# EUROPEAN PATENT APPLICATION

(11) **EP 4 831 465 A1**
(43) Date of publication of application: **28.10.2026**
(21) Application number: 26174805.7
(22) Date of filing: 27.04.2026
(51) Int. Cl.: F02C 3/10, B64D 35/022, F02C 3/107, F02C 7/32, F02C 7/36, F02K 5/00

(54) **HYBRID-ELECTRIC AIRCRAFT PROPULSION SYSTEM**

(30) Priority: 25.04.2025 US 202519190149
(71) Applicant: RTX Corporation, Farmington, CT 06032 (US)
(72) Inventor: CLARK, Thomas E., Wells, 04090 (US); YAZICI, Murat, Glastonbury, 06033 (US)
(74) Representative: Dehns

(57) **Abstract**

An aircraft propulsion system (20) includes a gas turbine engine (22), a propulsor rotor (26), and an electrical assembly (24). The gas turbine engine (22) forms a core flowpath (110) along an axis (42). The gas turbine engine (22) further includes a first rotating structure (44) and a third rotating structure (48). The first rotating structure (44) includes a bladed first compressor rotor (52) and a bladed first turbine rotor (54). The third rotating structure (48) includes a bladed third turbine rotor (64) downstream of the bladed first turbine rotor (54). The third rotating structure (48) is axially separate from the first rotating structure (44). The propulsor rotor (26) is mechanically independent of the gas turbine engine (22). The electrical assembly (24) includes a first electric machine (66) and a third electric machine (70). The first electric machine (66) is operably coupled with the propulsor rotor (26). The third electric machine (70) is operably coupled with the third rotating structure (48). The first electric machine (66) is electrically connected with the third electric machine (70).

## Description

### BACKGROUND

### 1. Technical Field

This invention relates generally to aircraft propulsion systems and, more particularly, to electrical systems for hybrid-electric propulsion systems.

### 2. Background Information

Hybrid-electric aircraft propulsion systems may typically include an engine mechanically coupled with one or more electric machines of an aircraft electrical system. Various hybrid-electric propulsion system configurations are known. While these known systems may be suitable for their intended purposes, there is room in the art for improvement.

### SUMMARY

According to an aspect of the present invention, an aircraft propulsion system includes a gas turbine engine, a propulsor rotor, and an electrical assembly. The gas turbine engine includes a compressor section, a combustor section, and a turbine section. The gas turbine engine forms a core flowpath extending through the compressor section, the combustor section, and the turbine section along an axis of the aircraft propulsion system. The gas turbine engine further includes a first rotating structure and a third rotating structure. The first rotating structure includes a bladed first compressor rotor at the compressor section and a bladed first turbine rotor at the turbine section. The third rotating structure includes a bladed third turbine rotor at the turbine section downstream of the bladed first turbine rotor. The third rotating structure is axially separate from the first rotating structure. The propulsor rotor is mechanically independent of the gas turbine engine. The electrical assembly includes a first electric machine, a third electric machine, and an electrical distribution system. The first electric machine is operably coupled with the propulsor rotor. The third electric machine is operably coupled with the third rotating structure. The electrical distribution system electrically connects the first electric machine and the third electric machine.

Optionally, and in accordance with the above, the gas turbine engine may further include a second rotating structure, and the second rotating structure may include a bladed second compressor rotor disposed at the compressor section upstream of the bladed first compressor rotor.

Optionally, and in accordance with any of the above, the second rotating structure may further include a bladed second turbine rotor disposed at the turbine section downstream of the bladed first turbine rotor and upstream of the bladed third turbine rotor, and the third rotating structure may be axially separate from the second rotating structure.

Optionally, and in accordance with any of the above, the first rotating structure and the second rotating structure may be concentric.

Optionally, and in accordance with any of the above, the gas turbine engine may further include a geartrain operably coupling the first rotating structure with the third rotating structure axially between the bladed first compressor rotor and the bladed second compressor rotor.

Optionally, and in accordance with any of the above, the electrical assembly may further include a second electric machine operably coupled with the first rotating structure, and the electrical distribution system may further electrically connect the second electric machine with the first electric machine and the third electric machine.

Optionally, and in accordance with any of the above, the gas turbine engine may include a bevel gear assembly operably coupling the second electric machine to the first rotating structure axially forward of the bladed first compressor rotor.

Optionally, and in accordance with any of the above, the propulsor rotor, the first rotating structure, and the third rotating structure may be rotatable about the axis.

Optionally, and in accordance with any of the above, the third electric machine may be disposed aft of the turbine section.

Optionally, and in accordance with any of the above, the third electric machine may be configured as a dedicated electric generator.

According to another aspect of the present invention, an aircraft propulsion system includes a gas turbine engine, a propulsor rotor, and an electrical assembly. The gas turbine engine includes a compressor section, a combustor section, and a turbine section. The gas turbine engine forms a core flowpath extending through the compressor section, the combustor section, and the turbine section along an axis of the aircraft propulsion system. The gas turbine engine further includes a first rotating structure and a third rotating structure. The first rotating structure includes a bladed first compressor rotor at the compressor section and a bladed first turbine rotor at the turbine section. The third rotating structure includes a bladed third turbine rotor at the turbine section downstream of the bladed first turbine rotor. The propulsor rotor is mechanically independent of the gas turbine engine. The electrical assembly includes a first electric machine, a second electric machine, a third electric machine, and an electrical distribution system. The first electric machine is operably coupled with the propulsor rotor. The second electric machine is operably coupled with the first rotating structure. The third electric machine is operably coupled with the third rotating structure. The electrical distribution system electrically connects the first electric machine, the second electric machine, and the third electric machine.

Optionally, and in accordance with the above, the gas turbine engine may further include a second rotating structure, and the second rotating structure may include a bladed second compressor rotor disposed at the compressor section upstream of the bladed first compressor rotor.

Optionally, and in accordance with any of the above, the second rotating structure may further include a bladed second turbine rotor disposed at the turbine section downstream of the bladed first turbine rotor and upstream of the bladed third turbine rotor, and the third rotating structure may be axially separate from the first rotating structure.

Optionally, and in accordance with any of the above, the first rotating structure and the second rotating structure may be concentric.

Optionally, and in accordance with any of the above, the gas turbine engine may further include a geartrain operably coupling the first rotating structure with the third rotating structure axially between the bladed first compressor rotor and the bladed second compressor rotor.

According to another aspect of the present invention, an aircraft propulsion system includes a gas turbine engine, a propulsor rotor, and an electrical assembly. The gas turbine engine includes a compressor section, a combustor section, and a turbine section. The gas turbine engine forms a core flowpath extending through the compressor section, the combustor section, and the turbine section along an axis of the aircraft propulsion system. The gas turbine engine further includes a first rotating structure and a third rotating structure. The first rotating structure includes a bladed first compressor rotor at the compressor section and a bladed first turbine rotor at the turbine section. The third rotating structure includes a bladed third turbine rotor at the turbine section downstream of the bladed first turbine rotor. The propulsor rotor is mechanically independent of the gas turbine engine. The electrical assembly includes a first electric machine, a third electric machine, and an electrical distribution system. The first electric machine is operably coupled with the propulsor rotor. The first electric machine is configured as a dedicated electric motor. The third electric machine is operably coupled with the third rotating structure. The third electric machine is configured as a dedicated electric generator. The electrical distribution system electrically connects the first electric machine and the third electric machine.

Optionally, and in accordance with any of the above, the electrical assembly may further include a second electric machine operably coupled with the first rotating structure, and the electrical distribution system may further electrically connect the second electric machine with the first electric machine and the third electric machine.

Optionally, and in accordance with any of the above, the gas turbine engine may further include a speed-reducing geartrain coupling the first electric machine with the propulsor rotor.

Optionally, and in accordance with any of the above, the gas turbine engine may further include a speed-reducing geartrain coupling the third electric machine with the third rotating structure.

Optionally, and in accordance with any of the above, the gas turbine engine may further include a second rotating structure, and the second rotating structure may include a bladed second compressor rotor disposed at the compressor section upstream of the bladed first compressor rotor.

The foregoing features and elements may be combined in various combinations without exclusivity, unless expressly indicated otherwise. For example, aspects and/or embodiments of the present invention may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 illustrates a perspective view of an aircraft including propulsion systems, in accordance with one or more embodiments of the present invention.
FIG. 2 schematically illustrates a cutaway, side view of a propulsion system including a gas turbine engine and an electrical assembly, in accordance with one or more embodiments of the present invention.
FIG. 3 schematically illustrates an electrical assembly for the propulsion system, in accordance with one or more embodiments of the present invention.
FIG. 4 schematically illustrates a cutaway, side view of a propulsion system including another gas turbine engine, in accordance with one or more embodiments of the present invention.
FIG. 5 schematically illustrates a cutaway, side view of a propulsion system including still another gas turbine engine, in accordance with one or more embodiments of the present invention.

### DETAILED DESCRIPTION

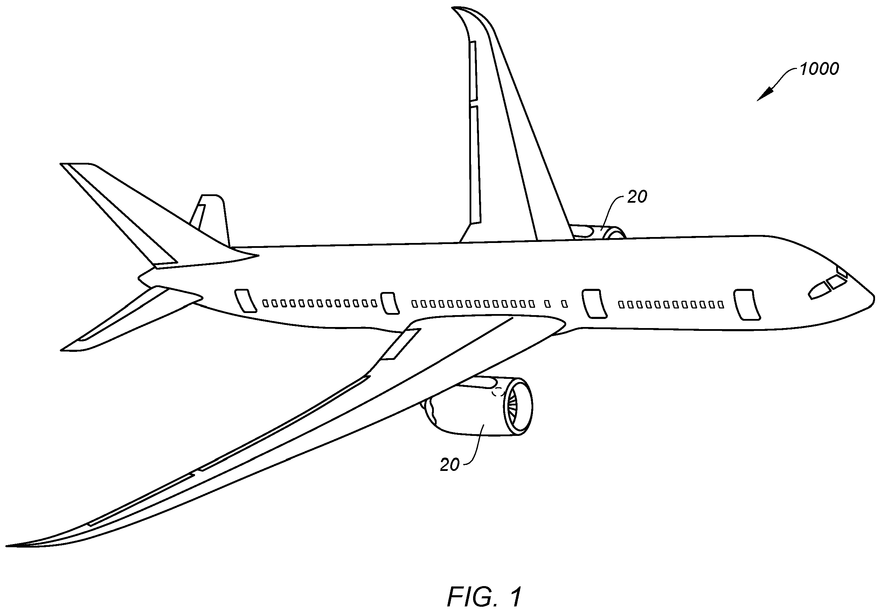

FIG. 1 illustrates an exemplary aircraft 1000 including a propulsion system 20. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV; e.g., a drone).

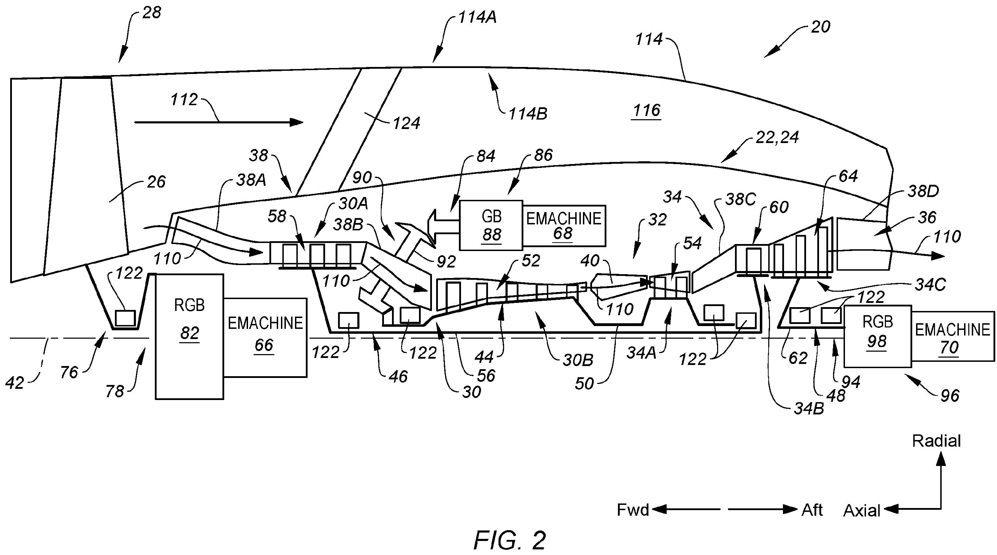

FIG. 2 schematically illustrates a cutaway, side view of the propulsion system 20. The propulsion system 20 of FIG. 2 includes a gas turbine engine 22, an electrical assembly 24, and a propulsor rotor 26 (e.g., a fan rotor, a propeller, an open rotor, etc.). The propulsion system 20 of the present invention is configured as a series hybrid propulsion system in which the propulsor rotor 26 is driven by an electric machine of the electrical assembly 24 and mechanically independent of (e.g., mechanically decoupled from) the gas turbine engine 22. The gas turbine engine 22 of FIG. 2 is configured as a multi-spool turbofan gas turbine engine. However, while the following description and accompanying drawings may refer to the turbofan gas turbine engine of FIG. 2 as an example, it should be understood that aspects of the present invention may be equally applicable to other types of gas turbine engines including, but not limited to, a turboshaft gas turbine engine, a turboprop gas turbine engine, a turbojet gas turbine engine, or a propfan (e.g., an open rotor) gas turbine engine.

The gas turbine engine 22 of FIG. 2 includes a fan section 28, a compressor section 30, a combustor section 32, a turbine section 34, and exhaust section 36, and an engine static structure 38. The compressor section 30 includes a low-pressure compressor (LPC) section 30A and a high-pressure compressor (HPC) section 30B. The combustor section 32 includes a combustor 40 (e.g., an annular combustor). The turbine section 34 includes a high-pressure turbine (HPT) section 34A, a low-pressure turbine (LPT) section 34B, and a power turbine section 34C. The compressor section 30, the combustor section 32, and the turbine section 34 form an engine core of the gas turbine engine. The gas turbine engine 22 extends axially along a propulsion system axis 42 between an upstream, forward end of the propulsion system 20 and a downstream, aft end of the propulsion system. The axis 42 may be a centerline axis of the gas turbine engine 22 and/or a centerline axis of one or more members of the gas turbine engine 22. The axis 42 may also or alternatively be a rotational axis of one or more members of the gas turbine engine 22. The propulsor rotor 26 may be rotatable about the axis 42. Alternatively, the propulsor rotor 26 may be rotatable about another rotational axis which is (e.g., laterally and/or angularly) offset from the axis 42.

Components of the compressor section 30 and the turbine section 34 form a first rotating structure 44 (e.g., a high-pressure spool), a second rotating structure 46 (e.g., a low-pressure spool), and a third rotating structure 48 of the gas turbine engine 22.

The first rotating structure 44 includes a first shaft 50, a bladed first compressor rotor 52 for the high-pressure compressor 30B section, and a bladed first turbine rotor 54 for the high-pressure turbine section 34A. The first shaft 50 interconnects the bladed first compressor rotor 52 and the bladed first turbine rotor 54. This first rotating structure 44 of FIG. 2 and its members 50, 52, 54 are rotatable about the axis 42. However, in other embodiments, the first rotating structure 44 and its members 50, 52, 54 may alternatively be rotatable about another rotational axis which is (e.g., laterally and/or angularly) offset from the axis 42.

The second rotating structure 46 includes a second shaft 56, a bladed second compressor rotor 58 for the low-pressure compressor 30A section, and a bladed second turbine rotor 60 for the low-pressure turbine section 34B. The second shaft 56 interconnects the bladed second compressor rotor 58 and the bladed second turbine rotor 60. This second rotating structure 46 of FIG. 2 and its members 56, 58, 60 are rotatable about the axis 42. However, in other embodiments, the second rotating structure 46 and its members 56, 58, 60 may alternatively be rotatable about another rotational axis which is (e.g., laterally and/or angularly) offset from the axis 42. The second rotating structure 46 of FIG. 2 is oriented concentric with the first rotating structure 44 (e.g., relative to the axis 42).

The third rotating structure 48 includes a third shaft 62 and a bladed third turbine rotor 64 for the power turbine section 34C. The third shaft 62 is connected to the bladed third turbine rotor 64. This third rotating structure 48 of FIG. 2 and its members 62, 64 are rotatable about the axis 42. However, in other embodiments, the third rotating structure 48 and its members 62, 64 may alternatively be rotatable about another rotational axis which is (e.g., laterally and/or angularly) offset from the axis 42. The third rotating structure 48 is axially separated from the first rotating structure 44 and the second rotating structure 46 (e.g., relative to the axis 42). In particular, the third rotating structure 48 of FIG. 2 is disposed axially aft of the second rotating structure 46, for example, axially between the low-pressure turbine section 34B and the exhaust section 36.

The engine static structure 38 may include one or more engine cases, cowlings, bearing assemblies, and/or other non-rotating structures configured to house and/or support (e.g., rotationally support) components of the gas turbine engine 22 sections 28, 30, 32, 34, 36. The engine static structure 38 of FIG. 2 includes a plurality of assembled engine case structures (e.g., annular case structures) including, but not limited to, a front center body (FCB) 38A, an intermediate case (IMC) 38B, a mid-turbine frame (MTF) 38C, and a turbine exhaust case (TEC) 38D. The engine static structure 38 of FIG. 2 additionally includes a plurality of bearing assemblies 122 configured to rotationally support the first rotating structure 44, the second rotating structure 46, the third rotating structure 48, and the propulsor rotor 26.

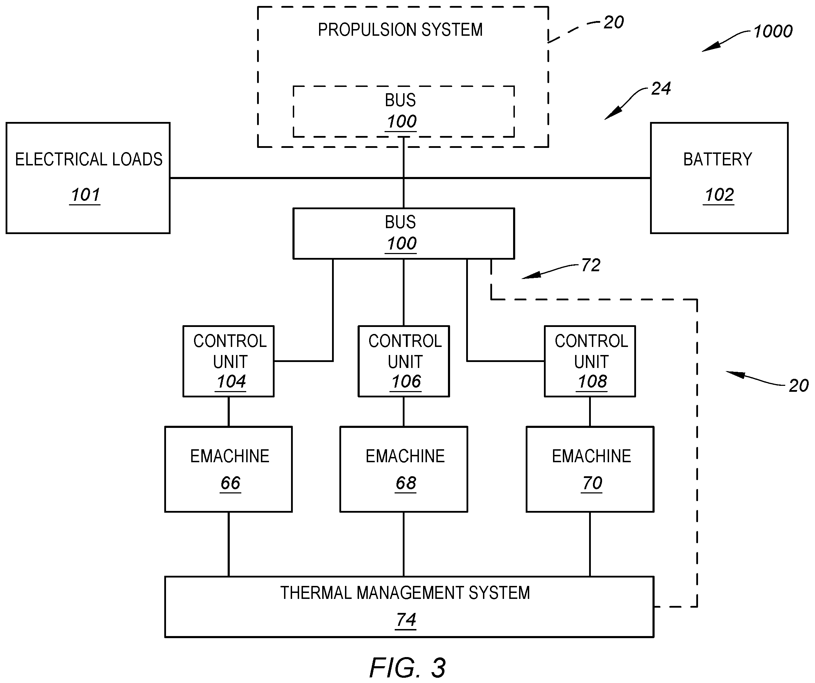

With additional reference to FIG. 3, the electrical assembly 24 includes a first electric machine 66, a second electric machine 68, a third electric machine 70, an electrical distribution system 72, and a thermal management system 74.

The first electric machine 66 is operably coupled with the propulsor rotor 26 by a drivetrain 76. The first electric machine 66 is configured to drive rotation of the propulsor rotor 26 through the drivetrain 76. In particular, the propulsor rotor 26 of FIG. 2 is rotationally driven only by operation of the first electric machine 66 (e.g., the propulsor rotor 26 operation is mechanically decoupled from the gas turbine engine 22). The drivetrain 76 may be configured as a geared drivetrain, where a geartrain 78 (e.g., a transmission, a speed change device, an epicyclic geartrain, etc.) is disposed between and operatively couples the propulsor rotor 26 to the first electric machine 66. With this arrangement, the propulsor rotor 26 may rotate at a different (e.g., slower) rotational speed than the first electric machine 66 (e.g., a rotor of the first electric machine 66). The geartrain 78 of FIG. 2 is housed, at least in part, by a gearbox 82 (e.g., a reduction gear box (RGB)). The first electric machine 66 may be mounted on the gearbox 82. The drivetrain 76 may alternatively be configured as a direct-drive drivetrain, where the geartrain 78 is omitted and the propulsor rotor 26 rotates at a same rotational speed as the first electric machine 66 (e.g., a rotor of the first electric machine 66).

The second electric machine 68 is operably coupled with the first rotating structure 44 (e.g., the first shaft 50) by a drivetrain 84. The drivetrain 84 may be configured as a geared drivetrain, where a geartrain 86 (e.g., a transmission, a speed change device, an epicyclic geartrain, etc.) is disposed between and operatively couples the second electric machine 68 to the first rotating structure 44. The geartrain 86 of FIG. 2 is housed, at least in part, by a gearbox 88. The second electric machine 68 may be mounted on the gearbox 88. The second electric machine 68 and the geartrain 86 are disposed radially outward of the engine core. The geartrain 86 of FIG. 2 further includes a bevel gear assembly 90 coupled with the first rotating structure 44 between the first rotating structure 44 and the gearbox 88. The bevel gear assembly 90 includes a tower shaft 92. The tower shaft 92 extends through a portion of the engine static structure 38 between the first rotating structure 44 and the gearbox 88. For example, the tower shaft 92 of FIG. 2 extends through (e.g., radially through) the intermediate case 38B between the low-pressure compressor section 30A and the high-pressure compressor section 30B.

The third electric machine 70 is operably coupled with the third rotating structure 48 (e.g., the third shaft 62) by a drivetrain 94. The third electric machine 70 is configured to be driven by rotation of the third rotating structure 48 through the drivetrain 94. The drivetrain 94 may be configured as a geared drivetrain, where a geartrain 96 (e.g., a transmission, a speed change device, an epicyclic geartrain, etc.) is disposed between and operatively couples the third rotating structure 48 to the third electric machine 70. With this arrangement, the third rotating structure 48 may drive the third electric machine 70 (e.g., a rotor of the third electric machine 70) at a different (e.g., slower) rotational speed than the third rotating structure 48. The geartrain 96 of FIG. 2 is housed, at least in part, by a gearbox 98 (e.g., a reduction gear box (RGB)). The third electric machine 70 may be mounted on the gearbox 96. The drivetrain 94 may alternatively be configured as a direct-drive drivetrain, where the geartrain 96 is omitted and the third electric machine 70 (e.g., a rotor of the third electric machine 70) rotates at a same rotational speed as the third rotating structure 48. The third electric machine 70 and the gearbox 98 of FIG. 2 are disposed aft of the third rotating structure 48, for example, within the exhaust section 36 at the axis 42.

Each of the electric machines 66, 68, 70 may be configurable as an electric motor and/or an electric generator (e.g., an electric motor-generator). For example, during a motor mode of operation, the electric machines 66, 68, 70 may operate as the electric machine to convert electricity received from the electrical distribution system 72 (e.g., through a respective control unit) to mechanical power. By contrast, during a generator mode of operation, the electric machines 66, 68, 70 may operate as the electric generator to convert mechanical power received from the propulsor rotor 26, the first rotating structure 44, and the third rotating structure 48, respectively, into electricity. The electric machines 66, 68, 70 of the present invention, however, are not limited to such exemplary operation. For example, the third electric machine 70 may typically be configured as a dedicated electric generator (e.g., without the electric machine functionality). In another example, the first electric machine 66 may be configured as a dedicated electric machine (e.g., without the electric generator functionality).

The electrical distribution system 72 electrically interconnects components of the electrical assembly 24 including the electric machines 66, 68, 70. The electrical distribution system 72 of FIG. 3 includes an electrical distribution bus 100 of the propulsion system 20. The electrical distribution bus 100 may be electrically connected with and configured to supply electrical power to electrical loads 101 of the aircraft 1000 and/or its propulsion system 20 such as, but not limited to, environmental control systems, lighting systems, communication systems, electronic control equipment, cockpit instrumentation, avionics systems, electric actuators, and the like. The electrical distribution bus 100 may be electrically connected with an energy storage system (e.g., a battery, a capacitor, etc.) of the aircraft 1000 or its propulsion system 20. The electrical distribution bus 100 of FIG. 3 is electrically connected with a battery 102 of the aircraft 1000. For aircraft, such as the aircraft 1000, including multiple propulsion systems, the electrical distribution bus 100 may also be electrically connected with the electrical distribution bus 100 of another one or more propulsion systems 20.

The electrical distribution system 72 further includes a first control unit 104, a second control unit 106, and a third control unit 108 electrically connecting the first electric machine 66, the second electric machine 68, and the third electric machine 70, respectively, with the electrical distribution bus 100. Each of the control units 104, 106, 108 is configured to control a power input and/or output from the first electric machine 66, the second electric machine 68, and the third electric machine 70, respectively. For example, when operating one of the electric machines 66, 68, 70 as the electric motor, the respective control unit 104, 106, 108 may be configured to regulate a flow of electricity from the electrical distribution bus 100 to the respective electric machines 66, 68, 70. This electricity flow regulation may include: (a) turning-on the flow of electricity from the electrical distribution bus 100 to the respective electric machine 66, 68, 70; (b) turning-off the flow of electricity from the electrical distribution bus 100 to the respective electric machine 66, 68, 70; (c) moderating the flow of electricity from the electrical distribution bus 100 to the respective electric machine 66, 68, 70 (e.g., to control a rotation speed and/or torque of the respective electric machine 66, 68, 70). Here, the respective control units 104, 106, 108 may operate as a motor controller. In another example, when operating one of the electric machines 66, 68, 70 as the electric generator, the respective control units 104, 106, 108 may be configured to regulate a flow of electricity from the respective electric machine 66, 68, 70 to the electrical distribution bus 100. This electricity flow regulation may include: (a) turning-on the flow of electricity from the respective electric machines 66, 68, 70 to the electrical distribution bus 100; (b) turning-off the flow of electricity from the respective electric machines 66, 68, 70 to the electrical distribution bus 100; (c) moderating the flow of electricity from the respective electric machines 66, 68, 70 to the electrical distribution bus 100. Here, the respective control units 104, 106, 108 may operate as a generator controller.

The thermal management system 74 is configured to facilitate lubrication and thermal regulation of the electric machines 66, 68, 70. The thermal management system 74 is connected in fluid communication with each of the electric machines 66, 68, 70 to circulate a coolant fluid (e.g., oil) through the electric machines 66, 68, 70. The thermal management system 74 may include one or more heat exchangers configured to facilitate temperature regulation of this coolant fluid such as, but not limited to, air-to-coolant heat exchangers, fuel-to-coolant heat exchangers, engine oil-to-coolant heat exchangers, cryogenic heat exchangers, and the like. In some embodiments, the thermal management system 74 may be configured for thermoelectric heat extraction such that the thermal management system 74 may generate electrical power using waste heat from the electric machines 66, 68, 70. Accordingly, members of the thermal management system 74 may be electrically connected with the electrical distribution bus 100 and configured to supply electrical power to the electrical distribution bus 100.

In operation of the propulsion system 20 of FIGS. 2 and 3, ambient air is directed through the fan section 28 and into a core flow path 110 (e.g., an annular flow path) and a bypass flow path 112 (e.g., an annular flow path) facilitated by rotation of the propulsor rotor 26 (e.g., a fan rotor in FIG. 2). The air flow is directed into the core flow path 110 at an annular core inlet duct upstream of the low-pressure compressor section 30A. Airflow along the core flow path 110 is compressed in the low-pressure compressor section 30A and the high-pressure compressor section 30B, mixed and burned with fuel in the combustor 40, and then directed sequentially through the high-pressure turbine section 34A, the low-pressure turbine section 34B, and the power turbine section 34C. The bladed first turbine rotor 54, the bladed second turbine rotor 60, and the bladed third turbine rotor 64 rotationally drive the first rotating structure 44, the second rotating structure 46, and the third rotating structure 48, respectively, in response to the combustion gas flow through the turbine section 34. The bypass flow path 112 may be disposed outside the engine static structure 38. For example, the engine static structure 38 and an outer aircraft propulsion system housing 114 (e.g., a nacelle) may form an annular bypass duct 116 radially therebetween, and airflow may be directed through the annular bypass duct along the bypass flow path 112. This outer aircraft propulsion system housing 114 may include an outer nacelle structure 114A and an inner nacelle structure 114B. The outer nacelle structure 114A forms an aerodynamic exterior flow boundary of the propulsion system 20 bordering an environment external to the propulsion system 20. The inner nacelle structure 114B forms the annular bypass duct and the bypass flow path 112. Airflow along the bypass flow path 112 may be directed through a plurality of fan exit guide vanes (FEGV) 124 extending through the annular bypass duct between the inner nacelle structure 114B and the engine static structure 38. The fan exit guide vanes 124 are arranged as a circumferential array downstream of the propulsor rotor 26.

The first electric machine 66 operates (e.g., as an electric motor) to drive rotation of the propulsor rotor 26 to generate propulsion thrust from the propulsion system 20. Under some operating conditions, such as aircraft 1000 descent, the first electric machine may alternatively operate as an electric generator, driven by rotation of the propulsor rotor 26 to generate electrical power and supply the electrical power to the electrical distribution bus 100. The second electric machine 68 may operate as an electric motor or an electric generator. The second electric machine 68 may be operated as an electric motor to facilitate an engine start sequence for the gas turbine engine 22 by driving rotation of the first rotating structure 44. The second electric machine 68 may be selectively operated, as an electric motor or an electric generator, at different gas turbine engine 22 operating conditions to facilitate more efficient operation of the gas turbine engine 22. For example, during low engine power conditions such as ground idle, cruise, or the like, the second electric machine 68 may operate as an electric generator to extract excess power from the first rotating structure 44 to generate electrical power and supply the electrical power to the electrical distribution bus 100 (e.g., for storage at the battery 102). Alternatively, for example, during high-acceleration and/or high engine power conditions such as takeoff, the second electric machine 68 may operate as an electric motor to facilitate rotation of the first rotating structure 44. The third electric machine 70 operates as a near-constant-speed electrical generator driven by rotation of the third rotating structure 48. The third rotating structure 48 drives the third electric machine 70 to generate electrical power and supply the electrical power to the electrical distribution bus 100 for operation of the first electric machine 66 and the propulsor rotor 26.

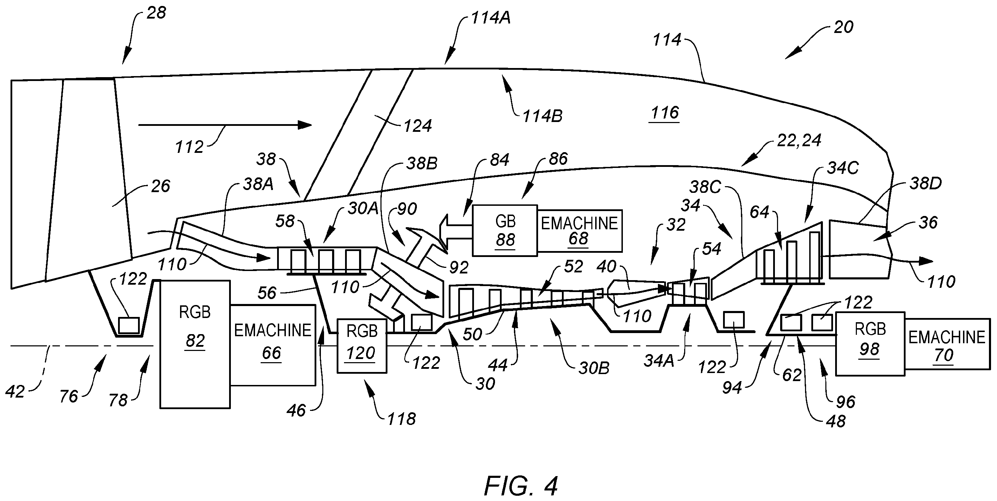

FIG. 4 schematically illustrates a cutaway, side view of another embodiment of the propulsion system 20. As shown in FIG. 4, the second rotating structure 46 (e.g., the bladed second compressor rotor 58) may be rotationally driven by the first rotating structure 44. Accordingly, in contrast to the gas turbine engine 22 of FIG. 2, the gas turbine engine 22 of FIG. 4 may omit the low-pressure turbine section 34B and the second rotating structure 46 of FIG. 4 may omit the bladed second turbine rotor 60.

The first rotating structure 44 of FIG. 4 is operably coupled with the second rotating structure 46 by a geartrain 118. The geartrain 118 (e.g., a transmission, a speed change device, an epicyclic geartrain, etc.) is configured to drive the second rotating structure 46 at a reduced rotational speed relative to the first rotating structure 44. The geartrain 118 of FIG. 4 is housed by a gearbox 120 (e.g., a reduction gear box (RGB)) disposed axially between the first rotating structure 44 and the second rotating structure 46. The power turbine section 34C of FIG. 4 is disposed directly downstream of the high-power turbine section 34A along the core flow path 110.

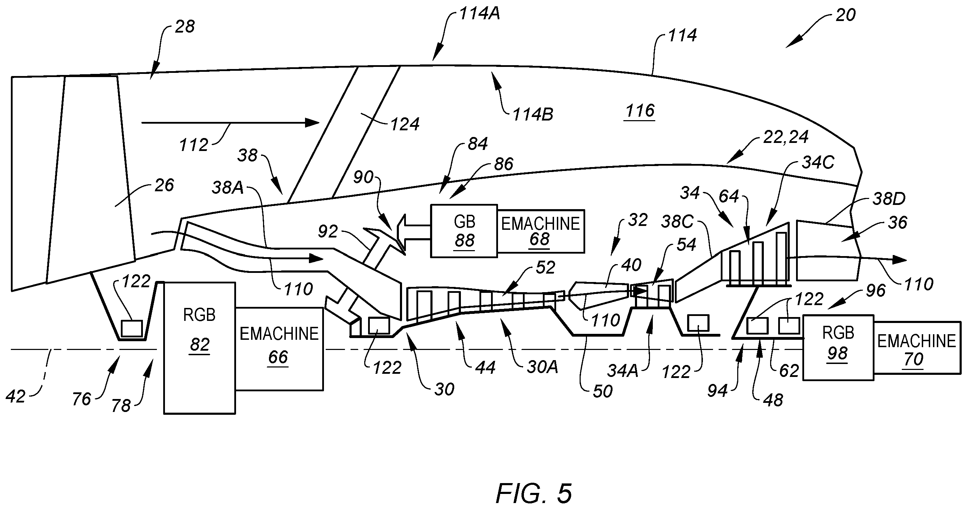

FIG. 5 schematically illustrates a cutaway, side view of another embodiment of the propulsion system 20. In contrast to the gas turbine engine 22 of FIG. 2, the second rotating structure 46 is omitted from the gas turbine engine 22 of FIG. 5. Accordingly, the compressor section 30 of FIG. 5 includes a single compressor rotor - the bladed first compressor rotor 52. The power turbine section 34C of FIG. 5 is disposed directly downstream of the high-power turbine section 34A along the core flow path 110.

While the principles of the invention have been described above in connection with specific apparatuses and methods, it is to be clearly understood that this description is made only by way of example and not as limitation on the scope of the invention. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this invention by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present invention is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the inventions may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the inventions--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An aircraft propulsion system (20) comprising:
a gas turbine engine (22) comprising a compressor section (30), a combustor section (32), and a turbine section (34), the gas turbine engine (22) forming a core flowpath (110) extending through the compressor section (30), the combustor section (32), and the turbine section (34) along an axis (42) of the aircraft propulsion system (20), the gas turbine engine (22) further comprising a first rotating structure (44) and a third rotating structure (48), the first rotating structure (44) comprising a bladed first compressor rotor (52) at the compressor section (30) and a bladed first turbine rotor (54) at the turbine section (34), the third rotating structure (48) comprising a bladed third turbine rotor (64) at the turbine section (34) downstream of the bladed first turbine rotor (54), the third rotating structure (48) axially separate from the first rotating structure (44);
a propulsor rotor (26) mechanically independent of the gas turbine engine (22); and
an electrical assembly (24) comprising a first electric machine (66), a third electric machine (70), and an electrical distribution system (72), the first electric machine (66) operably coupled with the propulsor rotor (26), the third electric machine (70) operably coupled with the third rotating structure (48), the electrical distribution system (72) electrically connecting the first electric machine (66) and the third electric machine (70).

2. The aircraft propulsion system (20) of claim 1, wherein the electrical assembly (24) further comprises a second electric machine (68) operably coupled with the first rotating structure (44), and the electrical distribution system (72) further electrically connects the second electric machine (68) with the first electric machine (66) and the third electric machine (70).

3. The aircraft propulsion system (20) of claim 2, wherein the gas turbine engine (22) includes a bevel gear assembly (90) operably coupling the second electric machine (68) to the first rotating structure (44) axially forward of the bladed first compressor rotor (52).

4. The aircraft propulsion system (20) of any preceding claim, wherein the propulsor rotor (26), the first rotating structure (44), and the third rotating structure (48) are rotatable about the axis (42).

5. The aircraft propulsion system (20) of any preceding claim, wherein the third electric machine (70) is disposed aft of the turbine section (34).

6. The aircraft propulsion system (20) of any preceding claim, wherein the third electric machine (70) is configured as a dedicated electric generator.

7. An aircraft propulsion system (20) comprising:
a gas turbine engine (22) comprising a compressor section (30), a combustor section (32), and a turbine section (34), the gas turbine engine (22) forming a core flowpath (110) extending through the compressor section (30), the combustor section (32), and the turbine section (34) along an axis (42) of the aircraft propulsion system (20), the gas turbine engine (22) further comprising a first rotating structure (44) and a third rotating structure (48), the first rotating structure (44) comprising a bladed first compressor rotor (52) at the compressor section (30) and a bladed first turbine rotor (54) at the turbine section (34), the third rotating structure (48) comprising a bladed third turbine rotor (64) at the turbine section (34) downstream of the bladed first turbine rotor (54);
a propulsor rotor (26) mechanically independent of the gas turbine engine (22); and
an electrical assembly (24) comprising a first electric machine (66), a second electric machine (68), a third electric machine (70), and an electrical distribution system (72), the first electric machine (66) operably coupled with the propulsor rotor (26), the second electric machine (68) operably coupled with the first rotating structure (44), the third electric machine (70) operably coupled with the third rotating structure (48), the electrical distribution system (72) electrically connecting the first electric machine (66), the second electric machine (68), and the third electric machine (70).

8. An aircraft propulsion system (20) comprising:
a gas turbine engine (22) comprising a compressor section (30), a combustor section (32), and a turbine section (34), the gas turbine engine (22) forming a core flowpath (110) extending through the compressor section (30), the combustor section (32), and the turbine section (34) along an axis (42) of the aircraft propulsion system (20), the gas turbine engine (22) further comprising a first rotating structure (44) and a third rotating structure (48), the first rotating structure (44) comprising a bladed first compressor rotor (52) at the compressor section (30) and a bladed first turbine rotor (54) at the turbine section (34), the third rotating structure (48) comprising a bladed third turbine rotor (64) at the turbine section (34) downstream of the bladed first turbine rotor (54);
a propulsor rotor (26) mechanically independent of the gas turbine engine (22); and
an electrical assembly (24) comprising a first electric machine (66), a third electric machine (70), and an electrical distribution system (72), the first electric machine (66) operably coupled with the propulsor rotor (26), the first electric machine (66) configured as a dedicated electric motor, the third electric machine (70) operably coupled with the third rotating structure (48), the third electric machine (70) configured as a dedicated electric generator, the electrical distribution system (72) electrically connecting the first electric machine (66) and the third electric machine (70).

9. The aircraft propulsion system (20) of claim 8, wherein the electrical assembly (24) further comprises a second electric machine (68) operably coupled with the first rotating structure (44), and the electrical distribution system (72) further electrically connects the second electric machine (68) with the first electric machine (66) and the third electric machine (70).

10. The aircraft propulsion system (20) of any preceding claim, wherein the gas turbine engine (22) further comprises a speed-reducing geartrain (78) coupling the first electric machine (66) with the propulsor rotor (26).

11. The aircraft propulsion system (20) of any preceding claim, wherein the gas turbine engine (22) further comprises a speed-reducing geartrain (96) coupling the third electric machine (70) with the third rotating structure (48).

12. The aircraft propulsion system (20) of any preceding claim, wherein the gas turbine engine (22) further comprises a second rotating structure (46), and the second rotating structure (46) comprises a bladed second compressor rotor (58) disposed at the compressor section (30) upstream of the bladed first compressor rotor (52).

13. The aircraft propulsion system (20) of claim 12, wherein the second rotating structure (46) further comprises a bladed second turbine rotor (60) disposed at the turbine section (34) downstream of the bladed first turbine rotor (54) and upstream of the bladed third turbine rotor (64), and the third rotating structure (48) is axially separate from the second rotating structure (46).

14. The aircraft propulsion system (20) of claim 12 or 13, wherein the first rotating structure (44) and the second rotating structure (46) are concentric.

15. The aircraft propulsion system (20) of any of claims 12 to 14, wherein the gas turbine engine (22) further comprises a geartrain (118) operably coupling the first rotating structure (44) with the second rotating structure (46) axially between the bladed first compressor rotor (52) and the bladed second compressor rotor (58).
